# EUROPÄISCHE PATENTSCHRIFT

(11) **EP 0 761 483 B1**
(45) Veröffentlichungstag und Bekanntmachung des Hinweises auf die Patenterteilung: **19.01.2000**
(21) Anmeldenummer: 96112474.0
(22) Anmeldetag: 02.08.1996
(51) Int. Cl.: B60G 17/052, B60G 17/015

(54) **Luftfederungsanlage für Fahrzeuge**
Air spring installation for vehicles
Installation de ressort pneumatique pour véhicules

(30) Priorität: 17.08.1995 DE 19530260
(43) Veröffentlichungstag der Anmeldung: 12.03.1997
(73) Patentinhaber: Haldex Brake Products GmbH & Co. KG, 69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- EP-A- 0 160 844
- EP-A- 0 170 794
- EP-A- 0 372 218
- EP-A- 0 400 301
- DE-A- 3 901 168
- DE-A- 4 317 847
- DE-A- 4 327 764
- FR-A- 2 665 497
- COMMERCIAL VEHICLE SUSPENSIONS, STEERING SYSTEMS, AND TRACTION, 1.November 1991, SOCIETY OF AUTOMOTIVE ENGINEERS, Seiten 15-24, XP000292479 SCHONFELD K H ET AL: "ELECTRONICALLY CONTROLLED AIR SUSPENSION (ECAS) FOR COMMERCIAL VEHICLES"

## Beschreibung

Die Erfindung bezieht sich auf eine Luftfederungsanlage für Fahrzeuge mit den im Oberbegriff des Anpruches 1 angegebenen Merkmalen. Eine solche Luftfederungsanlage wird insbesondere bei Kraftfahrzeugen eingesetzt, oft bei solchen, die über mehrere Achsen verfügen, wobei nicht nur an eine Vorder- und eine Hinterachse gedacht ist, sondern auch Nachlaufachsen, Vorlaufachsen und/oder Liftachsen auftreten können. Dabei geht es darum, die verschiedenen Luftfederbälge der Achsen entsprechend zu belüften.

Eine Luftfederungsanlage der eingangs beschriebenen Art ist aus der DE 43 27 764 A1 bekannt. Das Fahrzeug weist mindestens eine erste Achse auf, bei der zwischen der Achse und dem Fahrzeugaufbau zwei Luftfederbälge vorgesehen sind. Über eine Druckluftbeschaffungseinrichtung wird Druckluft zur Verfügung gestellt. Eine Ventilanordnung dient dem Be- und Entlüften der verschiedenen Luftfederbälge der Achse. Die Ventilanordnung weist ein 3/2-Wegemagnetventil auf, welches als vorgesteuertes Magnetventil ausgebildet ist. Zu diesem Zweck ist die Druckluft auch zu dem Magnetteil des Magnetventiles herangeführt, wobei der Kern des Magnetventils in Verbindung mit Ventilsitzen ein entsprechendes Vorsteuerventil bildet, über welches Druckluft auf einen nachgeschalteten Kolben eines Relaisventils geschickt wird, um an dem Vorsteuerventil einerseits kleine Querschnitte verwirklichen zu können und andererseits die Magnete mit kleinen Kräften zu belasten. An dem den Vorsteuerventilen nachgeschalteten Relaisventilen werden dann größere Querschnitte zur Verfügung gestellt, wie sie für die Be- und Entlüftung der Luftfederbälge erforderlich sind. Diese vorgesteuerten Magnetventile weisen eine Vielzahl von Einzelteilen auf, sind daher aufwendig in der Herstellung. Eine große Anzahl dieser Einzelteile sind dem Verschleiß unterworfen, so daß dabei in erhöhtem Maße die Gefahr von Leckagen und Betriebsstörungen gegeben ist. Andererseits wird die Verwendung von vorgesteuerten Magnetventilen offensichtlich für erforderlich gehalten, um auf diese Art und Weise größere Querschnitte beherrschen zu können.

Aus der Druckschrift der Firma Wabco "ECAS-Elektronische Niveauregulierung für luftgefederte Nutzkraftwagen", 1993, ist ein modular aufgebautes Luftfedersystem beschrieben, das vielfältige Einsatzmöglichkeiten in allen schweren Nutzkraftwagen durch sinnvolle Kombination von Einzelgeräten ermöglicht. Zum Be- und Entlüften der Luftfederbälge werden auch hier Magnetventile mit pneumatischer Vorsteuerung zum Einsatz gebracht, um im Bereich der Kerne der Magnetventile kleine Querschnitte und im Bereich der nachgeschalteten Relaisventile größere Querschnitte beherrschen zu können, wie sie zum Be- und Entlüften der Luftfederbälge erforderlich sind.

Der Erfindung liegt die Aufgabe zugrunde, eine Luftfederungsanlage der eingangs beschriebenen Art bereitzustellen, die ohne Einsatz vorgesteuerter Magnetventile auskommt und trotzdem hinreichend große Querschnitte zur Verfügung stellt, wie dies für die Be- und Entlüftung der Luftfederbälge erforderlich ist.

Erfindungsgemäß wird dies bei der Luftfederungsanlage der eingangs beschriebenen Art dadurch erreicht, daß als 3/2-Wegemagnetventile und/oder als 2/2-Wegemagnetventile ein direkt gesteuertes, großquerschnittiges Magnetventil vorgesehen ist, und daß der Kern jedes direkt gesteuerten Magnetventils druckentlastet ausgebildet und nach Art eines Kolbens mit einer Dichtung versehen ist.

Die Erfindung verläßt damit den eingefahrenen Weg im Stand der Technik, Magnetventile mit Vorsteuerung einzusetzen, um im Bereich der Vorsteuerung kleine und im Bereich des nachgeschalteten Relaisteils große Querschnitte zur Verfügung zu stellen. Stattdessen wird ein oder mehrere direkt gesteuerte, großquerschnittige Magnetventile zum Einsatz gebracht, wobei die Kerne dieser Magnetventile druckentlastet ausgebildet sind. Die Kerne dieser Magnetventile bilden zugleich den jeweiligen Ventilkörper, mit dem so große Querschnitte abgesperrt bzw. freigegeben werden, wie es für die Be- und Entlüftung der Luftfederbälge erforderlich ist. Die Ausbildung des Kerns des Magnetventils als Kolben mit Dichtung dient der Druckentlastung. Damit werden die Betätigungskräfte der Magnetventile vorteilhaft reduziert, so daß dennoch große Querschnitte beherrschbar sind. Die als Kolben ausgebildeten Kerne der Magnetventile, die gleichzeitig die Ventilkörper darstellen, sind in einer Betätigungsrichtung durch Federn belastet, die dann wirksam werden, wenn die Magnetventile nicht erregt sind. Damit werden die nicht erregten Stellungen eindeutig festgelegt. Damit wird die Ventilanordnung und -ausbildung vereinfacht. Jedes Ventil weist vergleichsweise zum Stand der Technik weniger Einzelteile auf, wodurch teilweise mögliche Gefahrenquellen ausgeschaltet und die Betriebssicherheit erhöht werden.

Die erste Achse ist in der Regel die Antriebsachse des Nutzfahrzeuges, insbesondere die Hinterachse, kann aber auch die Vorderachse sein.

Für eine weitere Achse oder Fahrzeugseite kann je ein weiteres direkt gesteuertes, großquerschnittiges 2/2-Wegemagnetventil vorgesehen sein, das dem 3/2-Wegemagnetventil der ersten Achse nachgeschaltet ist. Damit läßt sich an dem Nutzfahrzeug auch dann, wenn mehrere Achsen vorgesehen sind, ein Aufbau in der Ventilanordnung erreichen, der ausschließlich aus direkt gesteuerten, großquerschnittigen Magnetventilen besteht. Für jede weitere Achse ist dann nur noch ein einziges direkt gesteuertes, großquerschnittiges 2/2-Wegemagnetventil erforderlich. Wenn die beiden Fahrzeugseiten links und rechts individuell gesteuert werden sollen, ist jeweils eines dieser Ventile erforderlich. Bei gemeinsamer Steuerung der Luftfederbälge der beiden Fahrzeugseiten kann ein einziges direkt gesteuertes, großquerschnittiges 2/2-Wegemagnetventil mit Querdrosselung eingesetzt werden.

Für eine Laufachse, also eine nicht anhebbare Achse, die ganz oder teilweise be- bzw. entlastet werden kann, und/oder eine Liftachse, also eine heb- und senkbare Laufachse, kann ein pneumatisch angesteuertes 3/2-Wegeschaltventil und diesem nachgeschaltet ein 2/2-Wegemagnetventil vorgesehen sein, die dem großquerschnittigen 2/2-Wegemagnetventil parallelgeschaltet sind. Diese Ausbildungsanordnung gilt gleichermaßen für Vor- und/oder Nachlaufachsen und/oder Liftachsen. Vorteilhaft können sogar identische Ventilanordnungen für die beiden Fälle eingesetzt werden.

Für eine Laufachse und/oder eine Liftachse können ein pneumatisch angesteuertes 3/2-Wegeschaltventil und diesem nachgeschaltet ein 2/2-Wegemagnetventil vorgesehen sein, die zwei pneumatisch angesteuerten 3/2-Wegeschaltventilen vorgeschaltet sind. Es gibt hier verschiedene Kombinations- und Anordnungsmöglichkeiten, die sich nach den betreffenden Einsatzbedingungen und Vorstellungen der Fahrzeughersteller richten.

Mit besonderem Vorteil weist das 2/2-Wegemagnetventil zwei zu den beiden Luftfederbälgen der beiden Fahrzeugseiten führende Anschlüsse sowie eine Querdrosselung auf. Damit wird für eine solche Achse nur ein zusätzliches Magnetventil eingesetzt, wobei die beiden Luftfederbälge der beiden Fahrzeugseiten der Achse über die Querdrosselung in begrenzter Verbindung stehen.

Für die Realisierung der Querdrosselung können zwei konzentrische Ventilsitze vorgesehen sein, die mit dem als Ventilkörper ausgebildeten Kern zusammenarbeiten, wobei zumindest der Ventilsitz mit dem größeren Durchmesser Schließfunktion aufweisen kann. Dies stellt eine sehr einfache konstruktive Ausführung für eine Querdrosselung dar.

Für die erste und/oder eine weitere Achse kann je ein direkt gesteuertes, großquerschnittiges 2/2-Wegemagnetventil vorgesehen sein, mit denen der Luftfederbalg der jeweiligen Fahrzeugseite oder Achse gesteuert wird.

Der Kern des Magnetventils kann zur Realisierung der Druckentlastung durchbrochen ausgebildet sein. Die Durchbrechung besteht dabei zweckmäßig aus einer axial geführten Bohrung durch den Kern. Natürlich ist es auch möglich, im Gehäuse des Magnetventils eine Umgehungsleitung anzuordnen und auf diese Weise die Oberseite des Kerns des Magnetventils mit Druckluft zu beaufschlagen.

Die direkt gesteuerten, großquerschnittigen Magnetventile können zu Baueinheiten zusammengefaßt werden, wobei es sich empfiehlt, eine Baueinheit aus zwei Ventilen zu bilden, die ihrerseits mit anderen Baueinheiten verbindbar ist. Die anderen Baueinheiten können gleich oder unterschiedlich ausgebildet sein. Insbesondere ist es möglich, eine Baueinheit aus einem 3/2-Wegemagnetventil und einem 2/2-Wegemagnetventil mit Querdrosselung zu bilden. Eine andere Möglichkeit, eine Baueinheit zu bilden, besteht darin, zwei 2/2-Wegemagnetventile ohne Querdrosselung in einer Baueinheit unterzubringen.

Die Erfindung wird anhand bevorzugter Ausführungsbeispiele weiter erläutert und beschrieben. Es zeigen:
- Fig. 1: eine Luftfederungsanlage für die Hinterachse eines Nutzfahrzeuges in einer ersten Ausführungsform,
- Fig. 2: eine Luftfederungsanlage für eine Hinterachse eines Nutzfahrzeuges mit individueller Steuerung der beiden Fahrzeugseiten,
- Fig. 3: eine Luftfederanlage für ein Nutzfahrzeug mit gefederter Fahrachse und gefederter Vorderachse,
- Fig. 4: eine Luftfederungsanlage für ein Fahrzeug mit individuell fahrzeugseitig gesteuerter Hinterachse und gemeinsam gesteuerter Vorderachse,
- Fig. 5: eine Luftfederungsanlage für ein Fahrzeug mit einer angetriebenen Hinterachse und einer Liftachse,
- Fig. 6: eine Luftfederungsanlage für ein Fahrzeug mit einer angetriebenen Hinterachse, einer gefederten Vorderachse und einer zusätzlichen Laufachse,
- Fig. 7: eine Luftfederungsanlage für ein Fahrzeug mit einer angetriebenen Hinterachse, einer luftgefederten Vorderachse und einer Liftachse,
- Fig. 8: eine Luftfederungsanlage für ein Fahrzeug mit einer Liftachse,
- Fig. 9: eine weitere Ausführungsform für eine Luftfederungsanlage mit einer Liftachse und
- Fig. 10: einen Querschnitt durch eine Baueinheit aus einem direkt gesteuerten, großquerschnittigen 3/2-Wegemagnetventil und einem ebensolchen 2/2-Wegemagnetventil.

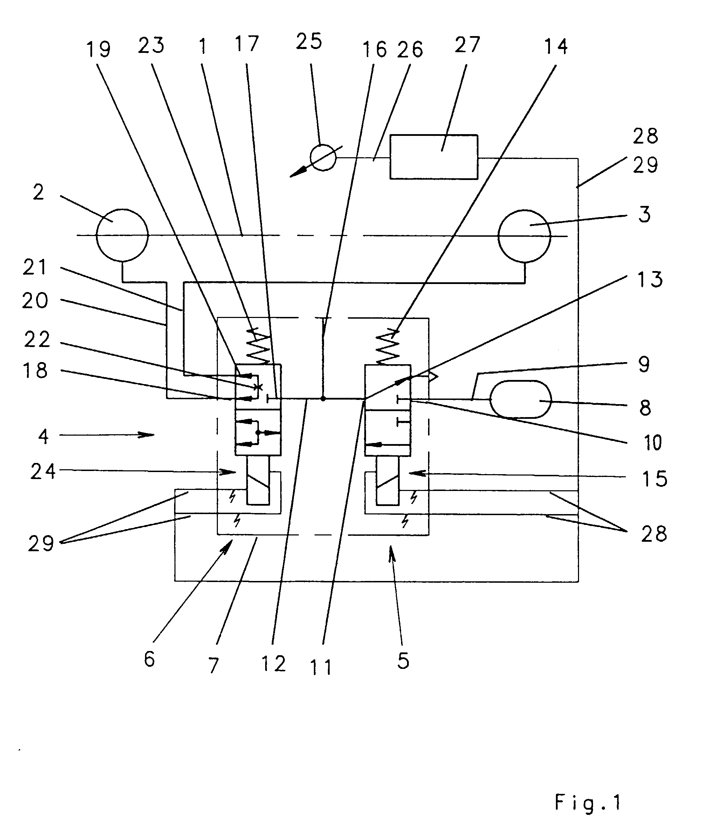

In Fig. 1 sind die zum Verständnis der Erfindung notwendigen Elemente in einer Art Grundschema, beschränkt auf die kleinste Einheit, angedeutet. Das Fahrzeug weist eine Hinterachse 1 auf, die durch eine gestrichelte Linie symbolisiert wird und als angetriebene Fahrachse ausgebildet ist. Zwischen der Hinterachse 1 und dem Fahrzeugaufbau sind zwei Luftfederbälge 2, 3 vorgesehen, wobei der Luftfederbalg 2 der linken Fahrzeugseite und der Luftfederbalg 3 der rechten Fahrzeugseite zugeordnet sein möge. Auf jeder Fahrzeugseite können auch mehr als ein Luftfederbalg angeordnet sein.

Zum gemeinsamen Be- und Entlüften der Luftfederbälge 2 und 3 der Hinterachse 1 ist eine Ventilanordnung 4 vorgesehen, in der ein direkt gesteuertes, großquerschnittiges 3/2-Wegemagnetventil 5 und ein direkt gesteuertes, großquerschnittiges 2/2-Wegemagnetventil 6 angeordnet sind. Die beiden direkt gesteuerten Magnetventile 5 und 6 können in einem gemeinsamen Gehäuse als Baueinheit 7 zusammengefaßt sein, die durch eine gestrichelte Linie angedeutet ist.

Es ist eine Druckluftbeschaffungseinrichtung vorgesehen, von der der Einfachheit halber nur ein Druckluftbehälter 8 dargestellt ist, von dem eine Leitung 9 zu dem ersten Anschluß 10 des 3/2-Wegemagnetventils 5 herangeführt ist. Das 3/2-Wegemagnetventil 5 weist darüberhinaus einen Anschluß 11 für eine Leitung 12 auf, die zu dem 2/2-Wegemagnetventil 6 geführt ist. Ein dritter Anschluß 13 ist als Entlüftungsanschluß ausgebildet und führt zur Atmosphäre. Das 3/2-Wegemagnetventil 5 ist mit seinem Ventilkörper über eine Feder 14 abgestützt. Es kann zwei Stellungen einnehmen. In der nicht erregten Stellung des zugehörigen Ventilmagneten 15 sichert die Feder 14 die in Fig. 1 dargestellte Stellung, in der die Leitung 12 entlüftet ist, während die Druckluft in der Leitung 9 abgesperrt ist. Es ist erkennbar, daß bei Erregung des Ventilmagneten 15 die andere Stellung an dem 3/2-Wegemagnetventil 5 eingenommen wird, in welcher die Entlüftung abgesperrt ist und Druckluft aus der Leitung 9 in die Leitung 12 fließen kann.

Von der Leitung 12 zweigt eine Leitung 16 ab, die bei dem Ausführungsbeispiel der Fig. 1 nach der Atmosphäre hin abgeschlossen ist und ansonsten dem weiteren Anschluß ähnlicher oder anderer Baueinheiten 7 aneinander dient, wie dies noch nachfolgend beschrieben wird.

Das 2/2-Wegemagnetventil 6 besitzt einerseits den einen Anschluß 17 für die Leitung 12 und andererseits zwei Anschlüsse 18 und 19, einmal für eine Leitung 20 zum Luftfederbalg 2 der linken Fahrzeugseite und zum anderen für eine Leitung 21 zum Luftfederbalg 3 der rechten Fahrzeugseite. Die beiden Leitungen 20 und 21 sind über eine Querdrosselung 22 dauerhaft miteinander verbunden, so daß im begrenzten Maße ein Luftaustausch zwischen den Luftfederbälgen 2 und 3 stattfinden kann. Auch das 2/2-Wegemagnetventil 6 besitzt einen als Ventilkörper ausgebildeten Kern, der einerseits auf einer Feder 23 abgestützt ist und andererseits von einem Ventilmagneten 24 beeinflußt wird. Das 2/2-Wegemagnetventil 6 weist zwei Stellungen auf, wobei die dargestellte Anschlußstellung der nicht erregten Stellung des Ventilmagneten 24 und dem Einfluß der Kraft der Feder 23 zugeordnet ist. Wie ersichtlich ist in dieser Stellung der Anschluß 17 und damit die Leitung 12 abgesperrt, so daß die beiden Leitungen 20 und 21 nur über die Querdrosselung 22 miteinander in Verbindung stehen. In der anderen Stellung des 2/2-Wegemagnetventils 6 ist dagegen die Leitung 12 mit den beiden Leitungen 20 und 21 verbunden.

Ein Wegsensor 25 dient der Erfassung des Weges bzw. Abstandes des Fahrzeugaufbaus von der Hinterachse 1. Er ist über eine elektrische Leitung 26 mit einer Steuereinrichtung 27 verbunden, von der wiederum Leitungen 28 bzw. 29 zu dem Ventilmagneten 15 bzw. 24 der beiden Wegemagnetventile 5 und 6 führen.

Wenn der Fahrzeugaufbau die vorgesehene Höhe über der Hinterachse 1 einnimmt und dies über den Wegsensor 25 festgestellt wird, werden die beiden Ventilmagnete 15 und 24 der Ventilanordnung über die Steuereinrichtung 27 stromlos, also nicht erregt, so daß beide Wegemagnetventile 5 und 6 infolge der Kraft der Federn 14 und 23 die in Fig. 1 dargestellte Stellung einnehmen. Die Luftfederbälge 2 und 3 sind insoweit lediglich über die Querdrossel 22 verbunden. Wird das Fahrzeug entladen, so wird sich der Abstand zwischen Fahrzeugaufbau und Hinterachse 1 vergrößern, was über den Wegsensor 25 festgestellt wird, so daß eine Reduzierung des Druckes der Druckluft in den Luftfederbälgen 2 und 3 erforderlich wird, um die ursprüngliche Höhe des Fahrzeugaufbaus über der Hinterachse 1 einzustellen. Zu diesem Zweck wird über die Steuereinrichtung 27 der Ventilmagnet 24 erregt, so daß das 2/2-Wegemagnetventil 6 umschaltet und insoweit die beiden Leitungen 20 und 21 an den der Entlüftung dienenden Anschluß 13 angeschlossen werden. Diese Entlüftung kann impulsweise erfolgen. Wird dagegen das Fahrzeug vergleichsweise mehr beladen, dann muß der Druck in den Luftfederbälgen 2 und 3 erhöht werden, um die vorgesehene Höhe des Fahrgestells über der Hinterachse 1 wieder herzustellen. Zu diesem Zweck werden die Ventilmagnete 15 und 24 der beiden Wegemagnetventile 5, 6 erregt, und es fließt Druckluft aus dem Druckluftbehälter 8 letztlich in die Luftfederbälge 2 und 3. Auch dies geschieht durch impulsweises Schalten des 2/2-Wegemagnetventils 6.

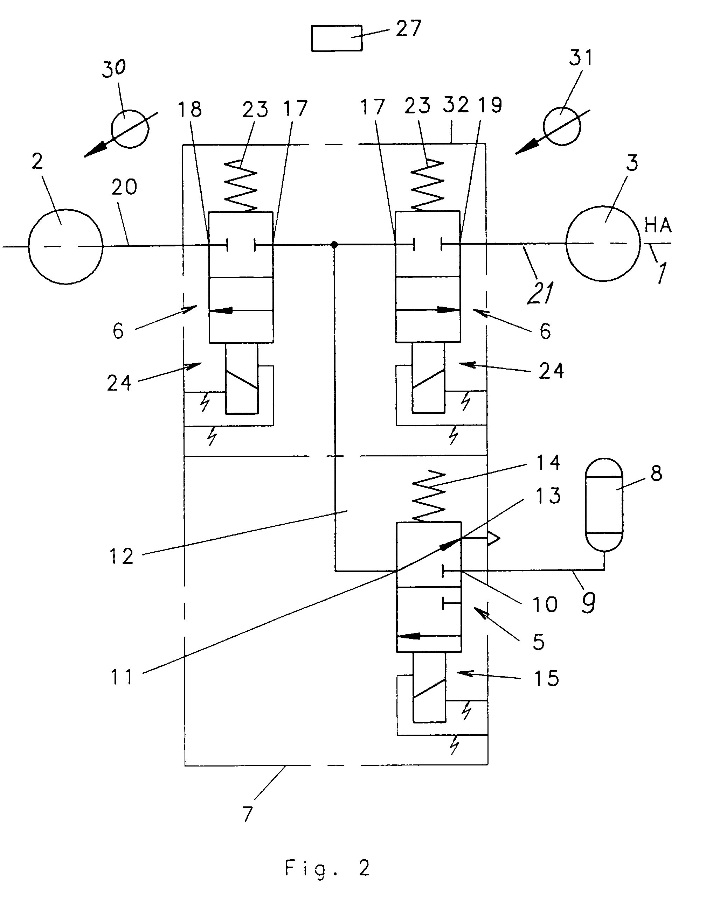

Fig. 2 zeigt eine zweite Ausführungsform der Luftfederungsanlage, die an sich ähnlich aufgebaut ist wie die in Fig. 1, jedoch ohne Querdrosselung und mit individueller Ansteuerung der beiden Fahrzeugseiten. Auch hier sind im Bereich der als Fahrachse ausgebildeten Hinterachse die beiden Luftfederbälge 2 und 3 vorgesehen, die der linken bzw. rechten Fahrzeugseite zugeordnet sind. Demzufolge ist das 2/2-Wegemagnetventil 6 in doppelter Ausfertigung einmal dem Luftfederbalg 2 und zum anderen dem Luftfederbalg 3 zugeordnet. Es versteht sich, daß keines dieser beiden 2/2-Wegemagnetventile 6 mit einer Querdrosselung versehen ist. Statt des einen gemeinsamen Wegsensors 25 sind hier ein erster Wegsensor 30, der der linken Fahrzeugseite zugeordnet ist, und ein zweiter Wegsensor 31 vorgesehen, der der rechten Fahrzeugseite zugeordnet ist. Die gemeinsame Steuereinrichtung 27 ist hier nur angedeutet. Es versteht sich, daß die elektrischen Leitungsverbindungen zu den Ventilmagneten 15, 24 der Übersichtlichkeit halber nicht dargestellt sind. Es ist hier eine erste Baueinheit 7 gebildet, in der nur das 3/2-Wegemagnetventil 5 angeordnet ist. In einer weiteren Baueinheit 32 sind die beiden 2/2-Wegemagnetventile 6 untergebracht.

Die Funktion dieser Luftfederungsanlage gemäß Fig. 2 ist ähnlich der gemäß Fig. 1, nur abweichend bezüglich der hier nicht vorhandenen Querdrosselung und ersetzt durch die individuelle Steuerung der beiden Fahrzeugseiten.

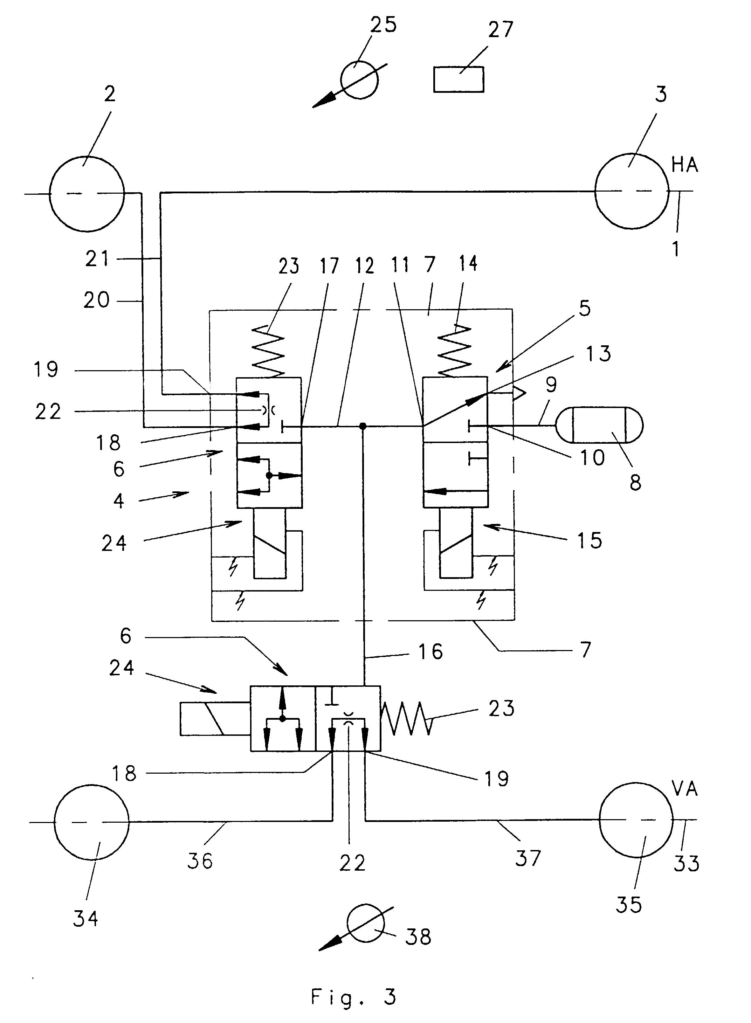

Die in Fig. 3 dargestellte Ausführungsform baut bezüglich der Ansteuerung der Hinterachse 1 auf der Ausführungsform gemäß Fig. 1 auf, auf die insoweit voll inhaltlich verwiesen werden kann. Die von der Leitung 12 ausgehende Leitung 16 führt hier jedoch zu einem zweiten 2/2-Wegemagnetventil 6, welches der Vorderachse 33 zugeordnet ist. Die Vorderachse 33 ist hier luftgefedert ausgebildet und besitzt auf der linken Fahrzeugseite einen Luftfederbalg 34 und auf der rechten Fahrzeugseite einen Luftfederbalg 35. Eine Leitung 36 führt vom Anschluß 18 des zweiten 2/2-Wegemagnetventils 6 zu dem Luftfederbalg 34. Eine Leitung 37 führt von dem Anschluß 19 zu dem Luftfederbalg 35. Auch dieses zweite 2/2-Wegemagnetventil 6 ist mit einer Querdrosselung 22 versehen. Der Hinterachse 1 ist der Wegsensor 25 zugeordnet. Der Vorderachse 33 ist der Wegsensor 38 zugeordnet. Die Steuereinrichtung 27 ist zur Ansteuerung der Hinterachse 1 und der Vorderachse 33 ausgebildet. Es ist erkennbar, daß die beiden Fahrzeugseiten links und rechts gemeinsam gesteuert werden und jeweils nur über eine Querdrosselung 22 miteinander in Verbindung stehen.

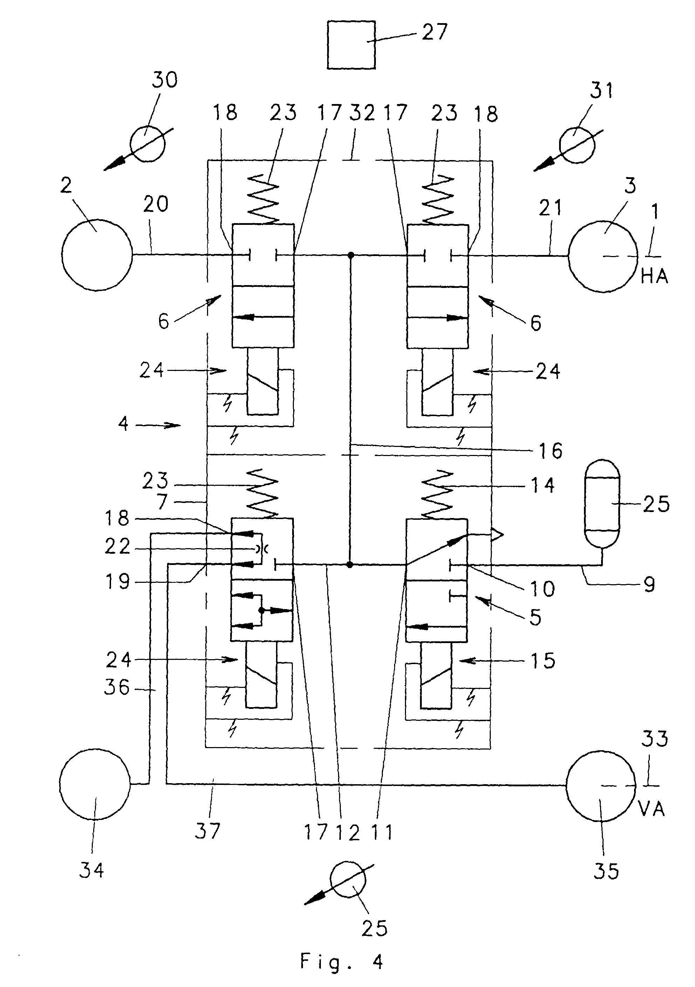

Die Ausführungsform der Luftfederungsanlage gemäß Fig. 4 baut auf der Ausführungsform der Fig. 1 und der Fig. 2 auf, wobei die Baueinheit 7 aus dem 3/2-Wegemagnetventil 5 und dem 2/2-Wegemagnetventil 6 hier der Vorderachse 33 zugeordnet ist. Dieses eine 2/2-Wegemagnetventil 6 ist deshalb auch mit einer Querdrosselung 22 versehen, so daß die Luftfederbälge 34, 35 der Vorderachse 33 gemeinsam angesteuert werden. Die Hinterachse 1 hingegen, die die Hauptlast der Beladung des Fahrzeuges zu tragen hat, ist individuell rechts und links gesteuert, wozu zwei Wegesensoren 30 und 31 vorgesehen sind und die beiden 2/2-Wegemagnetventile 6 in der Baueinheit 32 ohne Querdrosselung ausgebildet und zusammengefaßt sind. Die Funktion und gemeinsame Steuerung über die Steuereinrichtung 27 ist anhand der vorstehenden Erläuterungen bereits verständlich.

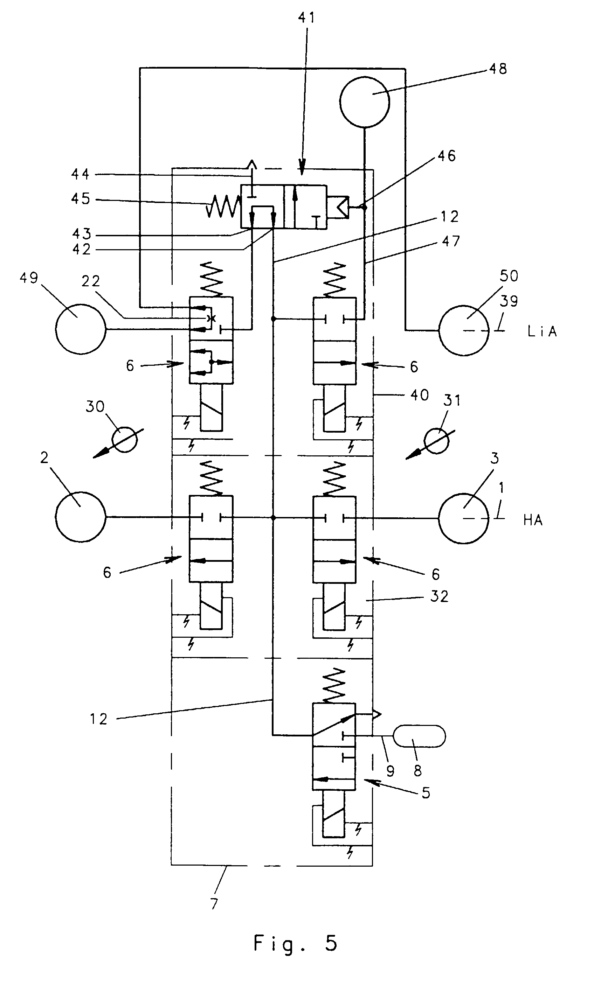

Die in Fig. 5 dargestellte Ausführungsform der Luftfederungsanlage ist nicht nur für ein Nutzfahrzeug mit einer angetriebenen Hinterachse 1 bestimmt. Das Fahrzeug weist darüberhinaus eine Liftachse 39 auf. Bezüglich der Ansteuerung der Hinterachse 1 kann auf das Ausführungsbeispiel der Fig. 2 verwiesen werden, in welchem die beiden Baueinheiten 7 und 32 bereits verwirklicht sind. Der Baueinheit 32 ist eine weitere Baueinheit 40 nachgeschaltet, die der Ansteuerung der Liftachse 39 dient. In der Baueinheit 40 ist ein pneumatisch ansteuerbares 3/2-Wegeschaltventil 41, ein 2/2-Wegemagnetventil 6 mit Querdrosselung 22 sowie ein weiteres 2/2-Wegemagnetventil 6 ohne Querdrosselung zusammengefaßt bzw. untergebracht. Das pneumatisch ansteuerbare 3/2-Wegeschaltventil 41 weist die Anschlüsse 42, 43 und 44 auf. Die Leitung 12 ist von der Baueinheit 7 durch die Baueinheit 32 hindurchgeführt und an die Baueinheit 40 angeschlossen. Sie führt zum Anschluß 42 des pneumatisch ansteuerbaren 3/2-Wegeschaltventils 41 und von dort über den Anschluß 43 zu dem 2/2-Wegemagnetventil 6 mit Querdrosselung 22. Andererseits ist das 2/2-Wegemagnetventil 6 ohne Querdrosselung direkt an die Leitung 12 angeschlossen. Der Ventilkörper des pneumatisch ansteuerbaren 3/2-Wegeschaltventils 41 ist auf einer Feder 45 abgestützt. Im pneumatischen Ansteuerteil besteht über eine Leitung 46 Verbindung zu einer Leitung 47, die ausgangsseitig von dem 2/2-Wegemagnetventil 6 zu dem Liftbalg 48 der Liftachse 39 führt. Die Liftachse 39 ist mit Luftfederbälgen 49 und 50 versehen, die der linken und rechten Fahrzeugseite zugeordnet sind und hier gemeinsam über das 2/2-Wegemagnetventil 6 mit Querdrosselung 22 angesteuert werden. Die nicht dargestellte gemeinsame Steuereinrichtung 27 steuert elektrisch die Ventilmagnete der direkt gesteuerten, großquerschnittigen Magnetventile 5 und 6 an, während das pneumatisch ansteuerbare 3/2-Wegeschaltventil 41 letztlich indirekt angesteuert wird. Durch impulsweise Betätigung des 2/2-Wegemagnetventils 6 mit Querdrosselung 22 ist es möglich, die Luftfederbälge 49 und 50 der Liftachse 39 zur Lastabstützung heranzuziehen, wobei die Liftachse 39 nur einen Bruchteil der Last der Hinterachse 1 aufnehmen kann, um beispielsweise Traktions- und Anfahrprobleme günstig zu gestalten. Es versteht sich, daß die Luftfederbälge 49 und 50 bei Nichtbeanspruchung mit einem geringen Restdruck beaufschlagt werden, die einer unzulässigen Faltenbildung entgegenwirkt. Ansonsten werden die Luftfederbälge 49 und 50 nur dann mit nennenswertem Druck beaufschlagt, wenn die Liftachse 39 abgesenkt ist, also die Leitung 47 drucklos ist.

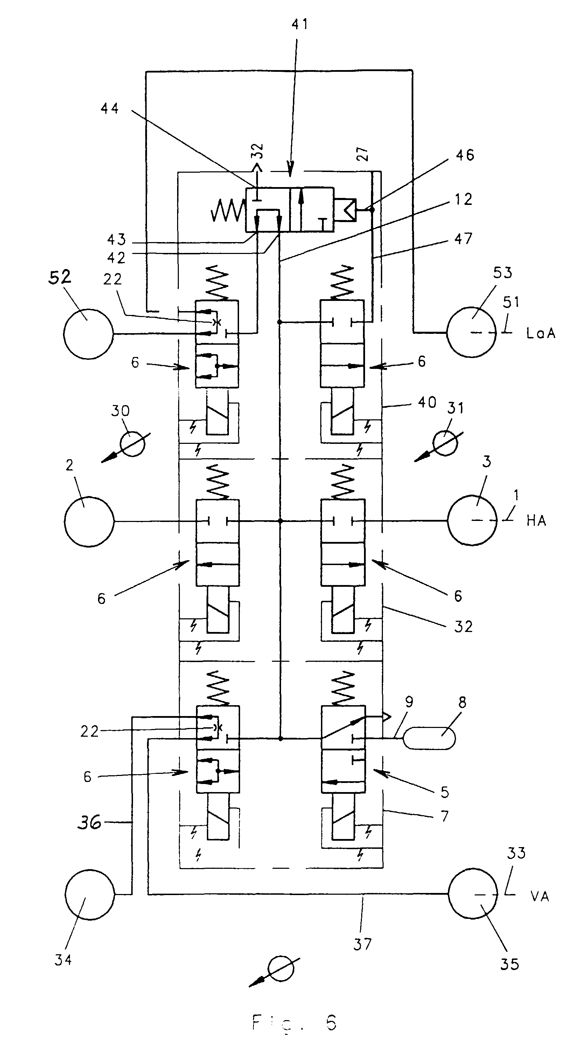

Die Ausführungsform der Fig. 6 entspricht hinsichtlich der Baueinheiten 7, 32 und 40 genau der Ausführungsform der Fig. 5. Statt der Liftachse 39 ist hier jedoch eine Laufachse 51 vorgesehen, also eine Achse, die nicht anhebbar ausgestaltet ist, sondern immer auf der Straße mitläuft. Die Laufachse 51 weist zwei Luftfederbälge 52 und 53 auf, die entweder leer verbleiben können oder aber zur Aufnahme eines Teiles der Last herangezogen werden können. Es versteht sich, daß die Leitung 47 an der Baueinheit 40 abgeschlossen ausgebildet ist, damit über diese Leitung auch hier das pneumatisch ansteuerbare 3/2-Wegeschaltventil 41 ansteuerbar ist. Bei dieser Ausführungsform wird die linke und rechte Fahrzeugseite nicht unterschieden, sondern die Luftfederbälge der beiden Fahrzeugseiten werden hier gemeinsam gesteuert.

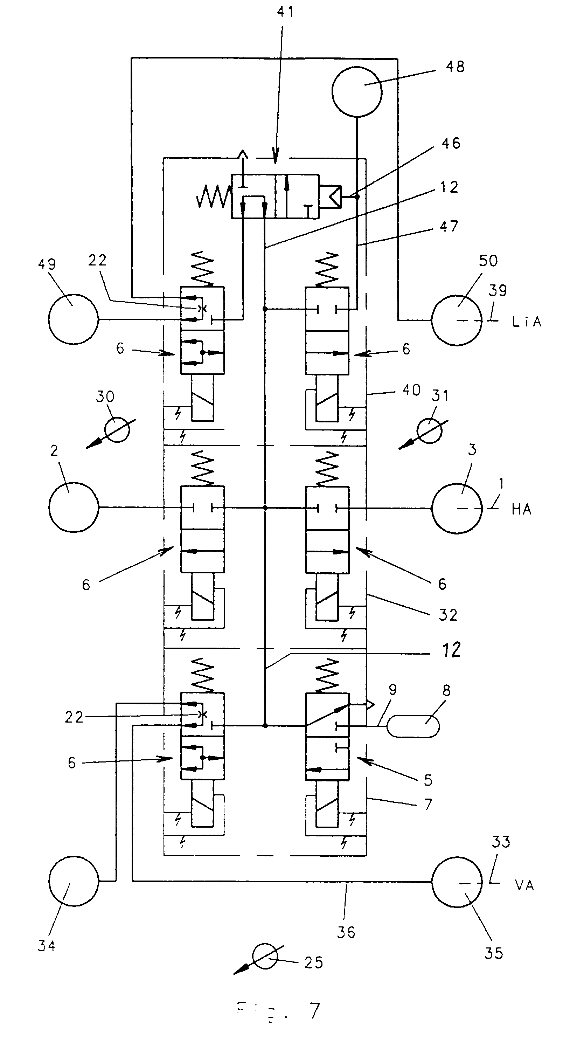

Die Ausführungsform der Luftfederungsanlage gemäß Fig. 7 stellt eine Kombination der Ausführungsformen gemäß Fig. 6 und Fig. 5 dar. Gemäß Fig. 6 ist auch die Vorderachse 33 luftgefedert und über die Baueinheit 7 gesteuert, in der das 3/2-Wegemagnetventil 5 und ein 2/2-Wegemagnetventil 6 mit Querdrosselung 22 angeordnet sind. Die Luftfederbälge 34 und 35 werden gemeinsam angesteuert, weshalb hier auch nur ein Wegsensor 25 zugeordnet ist. Die Ansteuerung der Hinterachse 1 erfolgt individuell seitenabhängig durch die Wegsensoren 30 und 31. Zu diesem Zweck sind in der Baueinheit 32 zwei 2/2-Wegemagnetventile 6 ohne Querdrosselung angeordnet. Der Steuerung der Liftachse 39 mit gemeinsamer Steuerung der Luftfederbälge 49 und 50 ist hier die Baueinheit 40 mit dem pneumatisch ansteuerbaren 3/2-Wegeschaltventil 41 und dem einen 2/2-Wegemagnetventil 6 mit Querdrosselung 22 und dem anderen 2/2-Wegemagnetventil 6 ohne Querdrosselung zugeordnet.

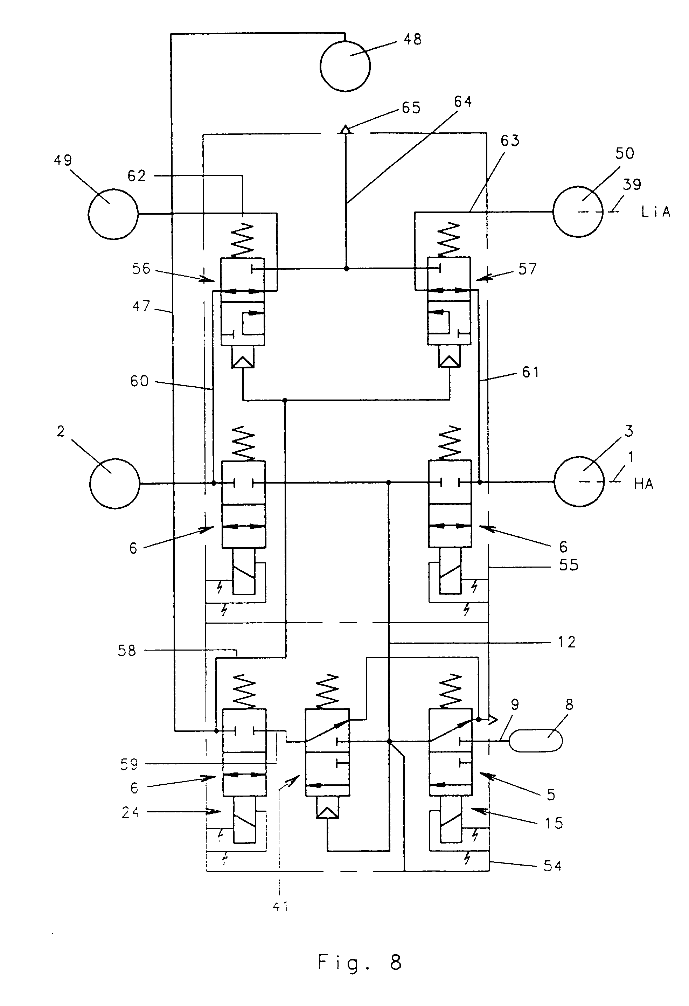

Die Ausführungsform gemäß Fig. 8 zeigt eine Luftfederungsanlage für ein Fahrzeug mit einer angetriebenen Hinterachse 1 und einer Liftachse 39. Es ist eine individuelle Ansteuerung für die linke und rechte Fahrzeugseite vorgesehen. Zu diesem Zweck ist in einer ersten Baueinheit 54 ein 3/2-Wegemagnetventil 5, ein pneumatisch ansteuerbares 3/2-Wegeschaltventil 41 und ein 2/2-Wegemagnetventil 6 ohne Querdrosselung zusammengefaßt. In einer zweiten Baueinheit 55 sind einerseits zwei 2/2-Wegemagnetventile 6 ohne Querdrosselung und andererseits zwei weitere pneumatisch ansteuerbare 3/2-Wegeschaltventile 56 und 57 untergebracht, zu denen eine Leitung 58 führt, die an die Leitung 47 angeschlossen ist. Eine Leitung 59 verbindet innerhalb der Baueinheit 54 das pneumatisch ansteuerbare 3/2-Wegeschaltventil 41 mit dem 2/2-Wegemagnetventil 6. Innerhalb der Baueinheit 55 führt ausgangsseitig von jedem 2/2-Wegemagnetventil 6 eine Leitung 60 bzw. 61 zu dem pneumatisch ansteuerbaren 3/2-Wegeschaltventil 56 bzw. 57. Von diesen Ventilen führt einerseits die Leitung 62 zu dem Luftfederbalg 49 und andererseits die Leitung 63 zu dem Luftfederbalg 50. Die pneumatisch ansteuerbaren 3/2-Wegeschaltventile 56 und 57 sind ausgangsseitig über eine Leitung 64 mit einem Entlüftungsanschluß 65 verbunden.

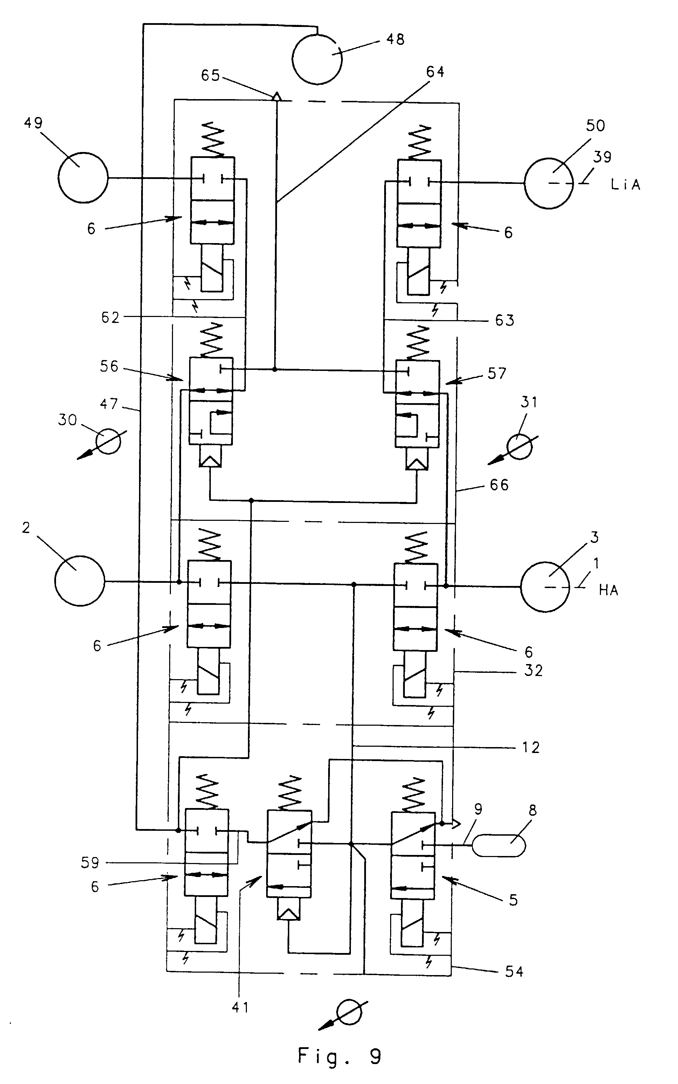

Bei der Ausführungsform gemäß Fig. 9 sind drei Baueinheiten 54, 32 und 66 zusammengefaßt. Die Baueinheit 54 ist übereinstimmend zu dem Ausführungsbeispiel der Fig. 8 aufgebaut. Für die Ansteuerung der Hinterachse 1 ist eine Baueinheit 32 angeschlossen, die übereinstimmend zu der Ausführungsform gemäß Fig. 4 ausgebildet ist. Die Wegsensoren 30 und 31 dienen der getrennten Erfassung der Wege auf der linken und rechten Fahrzeugseite. Dies gilt auch für die Liftachse 39. Innerhalb einer Baueinheit 66 sind einerseits die beiden pneumatisch ansteuerbaren 3/2-Wegeschaltventile 56 und 57 mit zwei weiteren 2/2-Wegemagnetventilen 6 zusammengefaßt, die auch hier als direkt elektrisch gesteuerte, großquerschnittige Magnetventile ausgebildet sind.

Die Leitungen 62 und 63 sind über diese Magnetventile 6 geführt. Die Funktion dieser Luftfederungsanlage ist anhand der Darstellung verständlich.

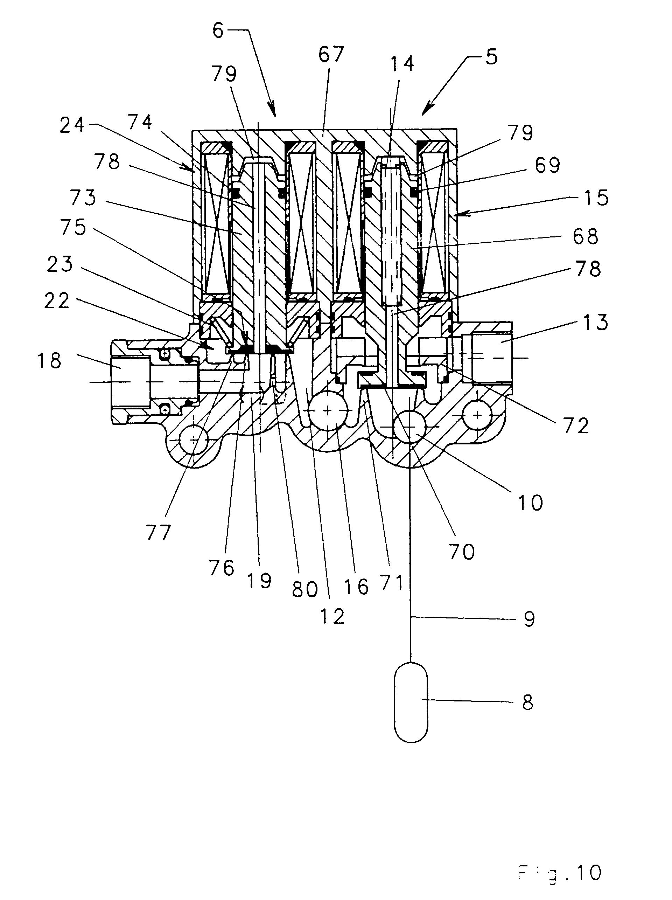

Fig. 10 zeigt in etwas mehr konstruktiverer Ausführungsform eine Baueinheit 7 (Fig. 1) mit einem gemeinsamen Gehäuse 67, in dem sowohl das 3/2-Wegemagnetventil 5 wie auch das 2/2-Wegemagnetventil 6 mit Querdrosselung 22 untergebracht sind. Das 3/2-Wegemagnetventil 5 ist als direkt gesteuertes, großquerschnittiges Magnetventil ausgebildet. Es weist einen als Kolben 68 mit Dichtung 69 ausgebildeten Kern auf, der gleichzeitig den Ventilkörper bildet. Der Kolben 68 ist von dem Ventilmagneten 15 umgeben. Wie ersichtlich geht der Kolben 68 in einen Doppelventilkörper 70 über, der mit einem Gehäuserand 71 ein Einlaßventil und mit einem Gehäuserand 72 ein Auslaßventil für das Abschließen des zur Entlüftung führenden Anschlusses 13 bildet. Eine Leitung 12, von der eine Leitung 16 abzweigt, führt zu dem 2/2-Wegemagnetventil 6. Auch dessen Kern ist als Kolben 73 mit Dichtung 74 ausgebildet und geht in seinem unteren Bereich in einen Doppelventilkörper 75 über, der mit zwei konzentrischen Ventilsitzen 76 und 77 Ventile in Richtung auf die Anschlüsse 18 und 19 bildet.

Die Kolben 68 und 73 sind druckentlastet ausgebildet. Zu diesem Zweck führt jeweils ein Kanal 78 durch die Kolben 68 und 73 hindurch in eine Ausgleichskammer 79 oberhalb der Dichtungen 69 und 74. Durch entsprechende Gestaltung des Gehäuserandes 71 bzw. des Ventilsitzes 77 sind gleichgroße Wirkflächen oben und unten verwirklicht, so daß die Druckentlastung gewährleistet ist. Die Querdrosselung 22 kann durch einen undichten Ventilsitz 76 oder aber durch eine Drosselbohrung 80 an der dargestellten Stelle erreicht werden.

### BEZUGSZEICHENLISTE

- 1 -: Hinterachse
- 2 -: Luftfederbalg
- 3 -: Luftfederbalg
- 4 -: Ventilanordnung
- 5 -: 3/2-Wegemagnetventil
- 6 -: 2/2-Wegemagnetventil
- 7 -: Baueinheit
- 8 -: Druckluftbehälter
- 9 -: Leitung
- 10 -: Anschluß
- 11 -: Anschluß
- 12 -: Leitung
- 13 -: Anschluß
- 14 -: Feder
- 15 -: Ventilmagnet
- 16 -: Leitung
- 17 -: Anschluß
- 18 -: Anschluß
- 19 -: Anschluß
- 20 -: Leitung

- 21 -: Leitung
- 22 -: Querdrosselung
- 23 -: Feder
- 24 -: Ventilmagnet
- 25 -: Wegsensor
- 26 -: elektrische Leitung
- 27 -: Steuereinrichtung
- 28 -: Leitung
- 29 -: Leitung
- 30 -: Wegsensor
- 31 -: Wegsensor
- 32 -: Baueinheit
- 33 -: Vorderachse
- 34 -: Luftfederbalg
- 35 -: Luftfederbalg
- 36 -: Leitung
- 37 -: Leitung
- 38 -: Wegsensor
- 39 -: Liftachse
- 40 -: Baueinheit

- 41 -: pneumatisch angesteuertes 3/2-Wegeschaltventil
- 42 -: Anschluß
- 43 -: Anschluß
- 44 -: Anschluß
- 45 -: Feder
- 46 -: Leitung
- 47 -: Leitung
- 48 -: Liftbalg
- 49 -: Luftfederbalg
- 50 -: Luftfederbalg
- 51 -: Laufachse
- 52 -: Luftfederbalg
- 53 -: Luftfederbalg
- 54 -: Baueinheit
- 55 -: Baueinheit
- 56 -: pneum. angesteuertes 3/2-Wegeschaltventil
- 57 -: pn. ang. 3/2-Wegeschaltv.
- 58 -: Leitung
- 59 -: Leitung
- 60 -: Leitung

- 61 -: Leitung
- 62 -: Leitung
- 63 -: Leitung
- 64 -: Leitung
- 65 -: Entlüftungsanschluß
- 66 -: Baueinheit
- 67 -: Gehäuse
- 68 -: Kolben
- 69 -: Dichtung
- 70 -: Doppelventilkörper
- 71 -: Gehäuserand
- 72 -: Gehäuserand
- 73 -: Kolben
- 74 -: Dichtung
- 75 -: Doppelventilkörper
- 76 -: Ventilsitz
- 77 -: Ventilsitz
- 78 -: Kanal
- 79 -: Ausgleichskammer
- 80 -: Drosselbohrung

## Patentansprüche

1. Luftfederungsanlage für Fahrzeuge, mit mindestens zwei zwischen einer ersten Achse (1) und einem Fahrzeugaufbau des Fahrzeuges angeordneten Luftfederbälgen (2, 3), mit einer Druckluftbeschaffungseinrichtung und einer Ventilanordnung (4) zwischen der Druckluftbeschaffungseinrichtung und den Luftfederbälgen der Achse, die ein 3/2-Wegemagnetventil und ein nachgeschaltetes 2/2-Wegemagnetventil aufweist, mit einem zwischen der Achse und dem Fahrzeugaufbau angeordneten Wegsensor sowie einer elektrischen Steuereinrichtung für die Betätigung der Magnetventile, **dadurch gekennzeichnet**, daß als 3/2-Wegemagnetventil und/oder als 2/2-Wegemagnetventil ein direkt gesteuertes großquerschnittiges Magnetventil (5, 6) vorgesehen ist, und daß der Kern jedes direkt gesteuerten Magnetventils (5, 6) druckentlastet ausgebildet und nach Art eines Kolbens (68, 73) mit einer Dichtung (69, 74) versehen ist.

2. Luftfederungsanlage nach Anspruch 1, **dadurch gekennzeichnet**, daß für eine weitere Achse (33, 39) oder Fahrzeugseite je ein weiteres direkt gesteuertes großquerschnittiges 2/2-Wegemagnetventil (6) vorgesehen ist, das dem 3/2-Wegemagnetventil (5) der ersten Achse (1) nachgeschaltet ist.

3. Luftfederungsanlage nach Anspruch 2, **dadurch gekennzeichnet**, daß für eine Laufachse (51) und/oder eine Liftachse (39) ein pneumatisch angesteuertes 3/2-Wegeschaltventil (41) und diesem nachgeschaltet ein 2/2-Wegemagnetventil (6) vorgesehen sind, die dem großquerschnittigen 2/2-Wegemagnetventil parallelgeschaltet sind.

4. Luftfederungsanlage nach Anspruch 2, **dadurch gekennzeichnet**, daß für eine Laufachse (51) und/oder eine Liftachse (39) ein pneumatisch angesteuertes 3/2-Wegeschaltventil (41) und diesem nachgeschaltet ein 2/2-Wegemagnetventil (6) vorgesehen sind, die zwei pneumatisch angesteuerten 3/2-Wegeschaltventilen (56, 57) vorgeschaltet sind.

5. Luftfederungsanlage nach Anspruch 1 oder 2, **dadurch gekennzeichnet**, daß das 2/2-Wegemagnetventil (6) zwei zu den beiden Luftfederbälgen der beiden Fahrzeugseiten führende Anschlüsse (18, 19) sowie eine Querdrosselung (22) aufweist.

6. Luftfederungsanlage nach Anspruch 5, **dadurch gekennzeichnet**, daß für die Querdrosselung (22) zwei konzentrische Ventilsitze (76, 77) vorgesehen sind, die mit dem als Ventilkörper ausgebildeten Kern zusammenarbeiten, wobei zumindest der Ventilsitz (77) mit dem größeren Durchmesser Schließfunktion aufweist.

7. Luftfederungsanlage nach Anspruch 1, **dadurch gekennzeichnet**, daß für die erste oder eine weitere Achse je ein direkt gesteuertes großquerschnittiges 2/2-Wegemagnetventil (6) vorgesehen ist, mit denen der Luftfederbalg der jeweiligen Fahrzeugseite oder Achse gesteuert wird.

8. Luftfederungsanlage nach Anspruch 1, **dadurch gekennzeichnet**, daß der Kern des Magnetventils (5, 6) zur Realisierung der Druckentlastung durchbrochen ausgebildet ist.

9. Luftfederungsanlage nach einem oder mehreren der Ansprüche 1 bis 8, **dadurch gekennzeichnet**, daß eine Baueinheit (7, 32) aus zwei Ventilen vorgesehen ist, die mit anderen Baueinheiten verbindbar ist.

10. Luftfederungsanlage nach Anspruch 9, **dadurch gekennzeichnet**, daß die Baueinheit (7) aus einem 3/2-Wegemagnetventil (5) und einem 2/2-Wegemagnetventil (6) mit Querdrosselung (22) besteht.

## Claims

1. An air suspension system for vehicles having at least two suspension bellows (2, 3) arranged between a first axle (1) and the chassis of the vehicle, having a source of compressed air, having a valve arrangement (4) between the source of compressed air and the suspension bellows of the axle, the valve arrangement comprising a 3/2-directional solenoid valve and a subsequent 2/2-directional solenoid valve, and having a displacement pickup positioned between the axle and the chassis of the vehicle and an electrical control device to actuate the solenoid valves, **wherein** the 3/2-directional solenoid valve and/or the 2/2-directional solenoid valve is designed as a directly operatable solenoid valve (5, 6) having a large cross-sectional area, and the core of each of the directly operatable solenoid valve (5, 6) is designed relieved from pressure and is provided in form of a piston (68, 73) having a seal (69, 74).

2. The air suspension system of claim 1, **wherein** a further directly operatable 2/2-directional solenoid valve (6) is provided for a further axle (33, 39) or side of the vehicle, the 2/2-directional solenoid valve (6) being positioned downstream to the 3/2-directional solenoid valve (5) of the first axle (1).

3. The air suspension system of claim 2, **wherein** for a running axle (51) and/or a lift axle (39) a pneumatically operatable 3/2-directional-control valve (41) and downstream of this a 2/2-directional solenoid valve (6) are provided, the valves being arranged in parallel to the 2/2-directional solenoid valve having the large cross-sectional area.

4. The air suspension system of claim 2, **wherein** for a running axle (51) and/or a lift axle (39) a pneumatically operatable 3/2-directional-control valve (41) and downstream of this a 2/2-directional solenoid valve (6) are provided, the valves being positioned upstream to two pneumatically operatable 3/2-directional-control valves (56, 57).

5. The air suspension system of claim 1 or 2, **wherein** the 2/2-directional solenoid valve (6) comprises two connections (18, 19) for the connection with the two suspension bellows of the both sides of the vehicle and has a cross throttling (22).

6. The air suspension system of claim 5, **wherein** two concentrical seat (76, 77) are provided to form the cross throttling (22), the seats cooperating with the core in form of a valve body, the seat (77) having the larger diameter having a closing position.

7. The air suspension system of claim 1, **wherein** a directly operatable 2/2-directional solenoid valve (6) each is provided for the first or a further axle, the solenoid valve (6) controlling the suspension bellow of the side of the vehicle or axle.

8. The air suspension system of claim 1, **wherein** the core of the solenoid valve (5, 6) has a channel to be relieved from pressure.

9. The air suspension system of one or more of the claims 1 to 8, **wherein** a unit (7, 32) is provided being composed of two valves, the unit being connectable with further units.

10. The air suspension system of claim 9, **wherein** the unit (7) comprises a 3/2-directional solenoid valve (5) and a 2/2-directional solenoid valve (6) having a cross throttling (22).

## Revendications

1. Installation de suspension pneumatique pour véhicules avec au moins deux coussins de suspension pneumatique (2,3) disposés entre un premier essieu (1) et une caisse du véhicule, avec une installation de production d'air comprimé et un jeu de vannes (4) entre l'installation de production d'air comprimé et les coussins de suspension pneumatique de l'essieu, installation qui comporte une vanne à solénoïde à trois raccords et deux positions et une vanne à solénoïde à deux raccords et deux positions en aval, avec un capteur de distance disposé entre l'essieu et la caisse et avec un organe de commande électrique destiné à l'actionnement des vannes à solénoïde
caractérisée
en ce que, comme vanne à solénoïde à trois raccords et deux positions et/ou comme vanne à solénoïde à deux raccords et deux positions, il est prévu une vanne à solénoïde (5,6) à commande directe de forte section, et
en ce que le noyau de chaque vanne à solénoïde (5,6) à commande directe est conçu à double effet et est pourvu, à la manière d'un piston (68,72), d'un segment d'étanchéité (69,74).

2. Installation de suspension pneumatique suivant la revendication 1
caractérisée
en ce que pour chaque essieu supplémentaire (33,39) ou pour chaque côté du véhicule, il est prévu une vanne à solénoïde à deux raccords et deux positions (6) à commande directe de forte section supplémentaire qui est connectée en aval à la vanne à solénoïde à trois raccords et deux positions (5) du premier essieu (1).

3. Installation de suspension pneumatique suivant la revendication 2 caractérisée
en ce que pour un essieu non moteur (51) et/ou pour un essieu relevable (39), il est prévu une vanne de commutation à trois raccords et deux positions à commande pneumatique (41) et, connectée en aval, une vanne à solénoïde à deux raccords et deux positions (6), ces vannes étant connectées en parallèle à la vanne à solénoïde à deux raccords et deux positions de forte section.

4. Installation de suspension pneumatique suivant la revendication 2 caractérisée
en ce que pour un essieu non moteur (51) et/ou pour un essieu relevable (39), il est prévu une vanne de commutation à trois raccords et deux positions à commande pneumatique (41) et, connectée en aval, une vanne à solénoïde à deux raccords et deux positions (6), ces vannes étant connectées en amont à deux vannes de commutation à trois raccords et deux positions à commande pneumatique (56,57).

5. Installation de suspension pneumatique suivant la revendication 1 ou la revendication 2, caractérisée
en ce que la vanne à solénoïde à deux raccords et deux positions (6) comporte deux raccordements (18,19) conduisant aux deux coussins de suspension pneumatique des deux côtés du véhicule, ainsi qu'un étranglement transversal (22).

6. Installation de suspension pneumatique suivant la revendication 5 caractérisée
en ce que pour l'étranglement transversal (22), il est prévu deux sièges de soupape concentriques (76,77) qui coopèrent avec le noyau en forme de corps de soupape, et où au moins le siège de soupape (77) ayant le diamètre le plus grand assure une fonction de fermeture.

7. Installation de suspension pneumatique suivant la revendication 1 caractérisée
en ce que pour le premier essieu, ou pour un essieu supplémentaire, il est prévu, par essieu, une vanne à solénoïde à deux raccords et deux positions (6) à commande directe de forte section au moyen de laquelle est commandé le coussin de suspension pneumatique du côté du véhicule ou de l'essieu correspondant.

8. Installation de suspension pneumatique suivant la revendication 1 caractérisée
en ce que, aux fin de réaliser le double effet, le noyau de la vanne à solénoïde (5,6) présente un percement.

9. Installation de suspension pneumatique suivant l'une quelconque ou plusieurs des revendications 1 à 8
caractérisée
en ce qu'il est prévu un module (7, 32) constitué de deux vannes, ce module pouvant être relié à d'autres modules.

10. Installation de suspension pneumatique suivant la revendication 9 caractérisée
en ce que le module (7) est constitué d'une vanne à solénoïde à trois raccords et deux positions (5) et d'une vanne à solénoïde à deux raccords et deux positions (6) comportant un étranglement transversal (22).
